Europäisches Patentamt

European Patent Office

Office européen des brevets

(19)

(11) **EP 1 071 986 B1**

(12) **FASCICULE DE BREVET EUROPEEN**

(45) Date de publication et mention
de la délivrance du brevet:
**14.04.2004 Bulletin 2004/16**

(21) Numéro de dépôt: **00905116.0**

(22) Date de dépôt: **11.02.2000**

(51) Int Cl.7: **G05D 1/02**, G01C 21/00,
G08G 5/04

(86) Numéro de dépôt international:
**PCT/FR2000/000345**

(87) Numéro de publication internationale:
**WO 2000/048049 (17.08.2000 Gazette 2000/33)**

(54) **PROCEDE POUR LA GENERATION D'UNE TRAJECTOIRE HORIZONTALE D'EVITEMENT DE ZONES DANGEREUSES POUR UN AERONEF**

VERFAHREN ZUR GENERIERUNG EINER HORIZONTALEN FLUGBAHN DIE GEFÄHRLICHE BEREICHE VERMEIDET

METHOD FOR GENERATING A HORIZONTAL PATH AVOIDING DANGEROUS ZONES FOR AN AIRCRAFT

(84) Etats contractants désignés:
**DE ES FR GB IT SE**

(30) Priorité: **12.02.1999 FR 9901720**

(43) Date de publication de la demande:
**31.01.2001 Bulletin 2001/05**

(73) Titulaire: **THALES AVIONICS S.A.**
**78141 Vélizy Villacoublay Cédex (FR)**

(72) Inventeurs:
• **BONHOURE, Fabienne,**
**Thomson-CSF Propriété Intel.**
**F-94117 Arcueil Cedex (FR)**

• **INGLESE, Fabien, Thomson-CSF Propriété Intel.**
**F-94117 Arcueil Cedex (FR)**

(74) Mandataire: **Beylot, Jacques**
**THALES Intellectual Property**
**31-33 avenue Aristide Briand**
**94117 Arcueil Cédex (FR)**

(56) Documents cités:
**EP-A- 0 802 469**       **WO-A-97/34276**
**WO-A-97/47945**       **WO-A-97/47947**
**FR-A- 2 740 570**       **US-A- 5 646 854**

EP 1 071 986 B1

**Description**

La présente invention concerne la détermination d'une trajectoire horizontale de consigne pour un mobile devant aller d'un point de passage obligé à un autre en respectant des contraintes imposées par des consignes de rayons de virage, des consignes de direction d'approche en route ou cap à tenir aux points de passage imposés et des consignes d'évitement de zones dangereuses.

Elle s'applique notamment, mais non exclusivement, à la détermination en temps réel, par le système de navigation d'un aéronef, d'une trajectoire à suivre entre deux points de passage imposés, qui respecte des contraintes de direction d'approche et de rayon de virage aux points de passage imposés, et d'évitement de zones dangereuses, cela afin d'avoir à bord d'un aéronef en cours de mission, un plan de vol constamment à jour, exploitable, à tout instant de la mission, par le système de gestion de vol de l'aéronef pour fournir au pilote, une aide à la navigation et éventuellement, diriger un système de pilotage automatique.

La trajectoire à suivre est donc calculée par des moyens situés au sol, au moment de la préparation de la mission, et introduite dans le système de gestion de vol de l'aéronef avant le départ en mission.

Toutefois, le pilote peut au cours du vol être amené à suivre une nouvelle trajectoire, par exemple à la suite d'un changement de mission ou de l'apparition d'une nouvelle zone dangereuse sur la trajectoire initiale. Il lui faut donc déterminer une nouvelle trajectoire et la suivre.

La détermination d'une nouvelle trajectoire en condition opérationnelle est délicate pour le pilote car celui-ci a souvent le choix entre de nombreuses possibilités parmi lesquelles il lui est difficile d'apprécier celle qui est le plus favorable à sa mission, cela d'autant qu'il doit toujours prendre sa décision très rapidement. De plus, lorsque la nouvelle trajectoire choisie n'a pas été prise en compte lors de la préparation de la mission, le pilote, qui ne dispose pas à bord de son aéronef, des éléments lui permettant de rendre la nouvelle trajectoire exploitable par le système de gestion du vol, doit reprendre le contrôle des commandes de vol

Pour décharger le pilote de la tâche de pilotage, même dans le cas de situations imprévues, on a déjà proposé d'équiper les aéronefs d'un calculateur supplémentaire d'aide à la navigation capable de proposer de nouvelles trajectoires permettant de résoudre le problème posé. Toutefois, un tel équipement s'avère très coûteux, et ne répond pas totalement au besoin du pilote, du fait qu'il présente un temps de réponse important, souvent incompatible avec les temps de réaction qui s'imposent à un pilote d'aéronef. En outre, les trajectoires proposées répondent souvent mal au problème posé, manquent de précision, et ne sont pas toujours directement exploitables par le système de gestion du vol de l'aéronef, le pilote devant souvent assurer lui-même le contrôle des commandes de vol, en suivant les instructions relatives à la trajectoire proposée, qui lui sont fournies.

De plus, dès que les chemins de contournement au sein d'un champ de zones dangereuses deviennent un peu sinueux, les procédés de calcul de trajectoire de contournement généralement employés dans ces calculateurs d'aide à la navigation deviennent incapables d'élaborer une trajectoire traversant ce champ de zones dangereuses sans pénétrer dans une de ses zones ou encore, de respecter les objectifs prévus. En effet, pour pouvoir déterminer en temps réel des trajectoires de contournement, ces procédés simplifient généralement le problème à résoudre en assimilant les zones dangereuses à des cercles circonscrits aux contours des zones dangereuses. Il en résulte que lorsque ces zones présentent des formes allongées, les trajectoires obtenues contournent ces zones à une distance importante, ce qui conduit à des longueurs de trajectoire de contournement excessives et donc très pénalisantes en termes de respect d'un éventuel minutage de la mission et d'autonomie en carburant. Par conséquent, de telles trajectoires peuvent être incompatibles avec les objectifs de la mission d'un aéronef. En outre, lorsque les zones dangereuses sont très rapprochées, cette modélisation grossière par un disque conduit à des zones qui se chevauchent, ce qui exclut toute solution de pénétration à l'intérieur du champ des zones dangereuses.

WO 97/47947 propose un procédé de pilotage automatique d'un aéronef permettant l'évitement latéral d'une zone fixe et comprenant la modélisation de la zone à éviter par une forme polygonale convexe, par approximation du contour de la zone par une succession des segments et élimination des points de concavité et des segments trop courts.

Jusqu'à présent, on ne connaît pas de procédé de génération d'une trajectoire horizontale respectant des contraintes de directions d'approche et de rayon de virage en des points de passage obligés et d'évitement de zones dangereuses, qui soit à la portée des capacités de calcul des systèmes de gestion de vol des aéronefs actuels.

La présente invention a pour but de supprimer ces inconvénients.

Elle a également pour but de faciliter la tâche du pilote d'un aéronef en le déchargeant, au profit du système de gestion de vol de l'aéronef, des problèmes de navigation liés à un déroutement imprévu lors d'une préparation de mission.

A cet effet, on propose un procédé pour la génération d'une trajectoire horizontale d'évitement de zones dangereuses, entre deux points de passage imposés, qui respecte des contraintes de direction d'approche et de rayon de virage aux points de passage imposés, et d'évitement de zones dangereuses délimitées par des contours.

Selon l'invention, ce procédé est caractérisé en ce qu'il comprend les étapes suivantes :

- la modélisation des contours de chaque zone dangereuse par une succession de segments délimités par des points géographiques,

- la détermination des caractéristiques d'un premier et second cercles de ralliement passant par le point initial, tangents à la route initiale, et ayant un rayon correspondant à celui du virage initial, ces deux cercles ayant des sens de parcours inverses l'un de l'autre, déterminés par le sens de la route initiale,

- la détermination des caractéristiques d'un premier et second cercles de capture passant par le point final, tangents à la route finale, et ayant un rayon correspondant à celui du virage final, ces deux cercles ayant des sens de parcours inverses l'un de l'autre, déterminés par le sens de la route finale,

- la détermination des caractéristiques de routes tangentes communes aux cercles de ralliement et au contour de chaque zone dangereuse, et communes aux cercles de capture et au contour de chaque zone dangereuse,

- parmi les tangentes précédemment déterminées, la sélection d'une tangente à un des cercles de ralliement et d'une route tangente à un des cercles de capture de manière à ce que ces deux tangentes définissent un squelette de trajectoire reliant un cercle de ralliement à un cercle de capture sans pénétrer dans une zone dangereuse,

- la détermination d'une trajectoire asservissable de contournement s'appuyant sur le squelette de trajectoire précédemment défini, et

- le suivi par l'aéronef la trajectoire ainsi définie.

L'invention permet ainsi, par des calculs relativement simples, donc exécutables avec les moyens de calcul actuellement disponibles à bord des aéronefs, de déterminer une trajectoire de contournement de zones dangereuses à éviter, cette trajectoire pouvant être mise sans délai, sous une forme directement exploitable par le système de gestion du vol en vue d'un pilotage automatique. Par ailleurs, comme les zones dangereuses sont modélisées par des successions de segments, la trajectoire de contournement passe au plus près des zones contournées, sans toutefois y pénétrer.

Selon une particularité de l'invention, ce procédé comprend en outre l'optimisation de la trajectoire de contournement, par ajout d'un segment de trajectoire intermédiaire entre les routes tangentes au cercle de ralliement et au cercle de capture, sélectionnées.

Selon une autre particularité de l'invention, si la trajectoire de contournement déterminée présente une longueur excédant un certain seuil prédéterminé par rapport à la longueur de la trajectoire initiale en l'absence de zones dangereuses, le procédé comprend en outre la détermination d'une trajectoire pénétrant à l'intérieur du champ des zones dangereuses, sans traverser une zone dangereuse.

Lorsque la configuration des zones dangereuses le permet, ces dispositions produisent des trajectoires encore plus courtes que la trajectoire de contournement précédemment calculée.

Selon une autre particularité de l'invention, des cercles d'équiprobabilité de danger sont centrés sur les points délimitant les segments de contour des zones dangereuses, le diamètre de ces cercles correspondant à une finesse de maillage du terrain, les tangentes aux zones dangereuses qui sont déterminées étant tangentes à ces cercles.

Avantageusement, il comprend en outre la sélection préalable des zones dangereuses à prendre en compte pour le calcul d'une trajectoire d'évitement, en sélectionnant toutes les zones dangereuses présentant des points de définition de leur contour situés dans un disque centré sur le milieu du segment délimité par les points initial et final, et incluant ces derniers.

Un mode de réalisation du dispositif selon l'invention sera décrit ci-après, à titre d'exemple non limitatif, avec référence aux dessins annexés dans lesquels

La figure 1 représente schématiquement l'équipement électronique embarqué à bord d'un aéronef et permettant de mettre en oeuvre le procédé selon l'invention ;

La figure 2 représente un squelette de trajectoire de contournement de zones dangereuses, obtenu par le procédé selon l'invention ;

Les figures 3 et 4 sont des vues partielles de la trajectoire à déterminer, permettant d'illustrer les procédés de calcul mis en oeuvre pour déterminer une tangente à une zone dangereuse, et les points d'intersection entre une droite et les contours d'une zone dangereuse ;

La figure 5 représente un squelette de trajectoire d'évitement de zones dangereuses par pénétration dans le champ de ces zones, obtenu par le procédé selon l'invention ;

La figure 6 est une vue partielle du champ de zones dangereuses permettant d'illustrer le calcul des tangentes à deux zones dangereuses ;

La figure 7 illustre un cas particulier de forme de zone dangereuse pris en compte par le procédé selon l'invention.

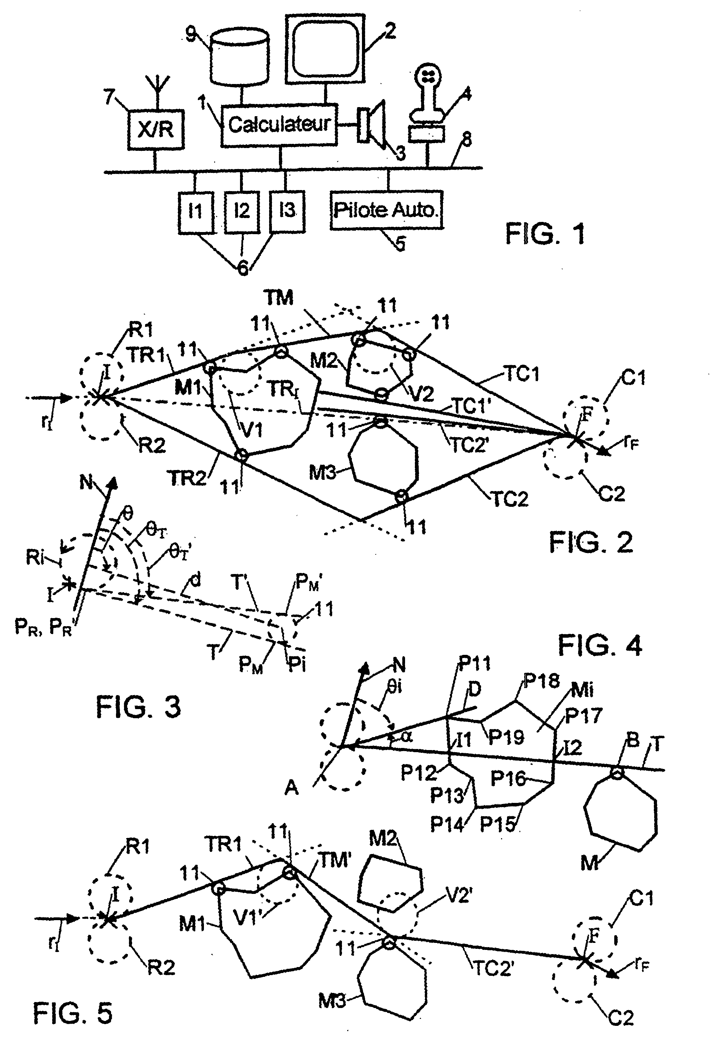

Le procédé selon l'invention est particulièrement adapté pour être mis en oeuvre par les équipements électroniques embarqués à bord d'un aéronef. Tel que représenté sur la figure 1, ces équipements comprennent un calculateur 1 connecté à un ou plusieurs écrans de visualisation 2, une mémoire de masse 9, et éventuellement un dispositif de signalisation d'alarmes, couplé à un haut-parleur 3 et/ou des voyants lumineux. Ce calculateur 1 est relié par exemple par un réseau de transmission de données 8 équipant l'aéronef, aux capteurs et instruments de vol 6 embarqués, aux commandes de pilotage 4, à un système de gestion du vol ou dispositif de pilotage automatique 5 et à dispositif de transmission de données numériques 7, par exemple de type "data link". De cette manière, le calculateur 1 peut acquérir en temps réel les données émanant des autres équipements électroniques embarqués, à savoir notamment, la position géographique de l'aéronef, son altitude, sa vitesse, son état et quantité de carburant disponible.

Le dispositif de pilotage automatique comprend une mémoire dans laquelle est enregistrée la trajectoire en cours, suivie par l'aéronef, cette trajectoire étant constituée d'une succession de segments de droite ou à route constante entre un point de départ et un point de destination, ces segments étant reliés par des arcs de cercles.

La mémoire de masse 9 contient les caractéristiques de l'aéronef, et en particulier les données définissant ses possibilités de manoeuvres, tel que le rayon minimum de virage en fonction de la vitesse, et la consommation en carburant en fonction de la vitesse, ainsi que toutes les données relatives à la mission.
Les données de mission comprennent notamment:

- des données cartographiques permettant notamment au calculateur 1 d'afficher sur l'écran 2 l'image d'une carte géographique de la zone survolée durant la mission,
- des données relatives à la navigation, par exemple la position géographique et les caractéristiques des radiobalises et des aérodromes accessibles par l'aéronef durant la mission,
- les données définissant la trajectoire prévue, permettant au calculateur d'afficher sur l'écran cette trajectoire en surimpression sur l'image de la carte,
- les données relatives aux éventuelles zones dangereuses à éviter, et
- les conditions météorologiques prévues durant la mission dans la zone survolée.

Les données relatives à la trajectoire prévue comprennent la position des points de passage imposés associés à une heure de rendez-vous, et une altitude de survol.

Les données relatives à chaque zone dangereuse comprennent les positions géographiques respectives d'une série de points de définition de contour, délimitant des segments successifs modélisant le contour de la zone dangereuse.

Toutes ces données peuvent être modifiées à tout instant, soit directement par le pilote ou les capteurs et instruments embarqués, soit par des informations reçues par la liaison radio ou le réseau de transmission de données. Dans le cas où l'objectif de la mission est modifié impliquant la définition d'une nouvelle trajectoire susceptible de traverser des zones dangereuses, ou dans le cas où une nouvelle zone dangereuse est identifiée, il apparaît alors souhaitable de pouvoir déterminer en temps réel une trajectoire d'évitement, tenant compte de la présence de ces zones dangereuses.

A cet effet, le calculateur 1 détermine les points de passage imposés, initial I et final F, que la trajectoire d'évitement doit relier, ces points étant associés à des contraintes respectives de route $r_I$ et $r_F$ (voir figure 2). Le point I et la route $r_I$ peuvent par exemple correspondre à la position et la route, actuelles de l'aéronef, ou au point de passage imposé suivant.

Le calculateur 1 place ensuite deux cercles, dits de ralliement R1, R2, tangents au point I à la route initiale $r_1$, et deux cercles, dits de capture C1 et C2, tangents au point F à la route finale $r_F$, ces cercles étant associés à un sens de parcourt défini par la direction de la route tangente respective. Le rayon des cercles R1, R2, C1, C2 correspond au rayon de virage de l'aéronef, et est déterminé par exemple en fonction de la vitesse courante de l'aéronef et d'un facteur de charge maximum. Les cercles de capture ou de ralliement qui traversent une zone dangereuse sont éliminés.

Le calculateur 1 sélectionne ensuite les zones dangereuses à prendre en compte pour le calcul d'une trajectoire d'évitement, en éliminant toutes les zones dangereuses qui se situent complètement en dehors d'un disque centré sur le milieu du segment IF reliant le point initial I au point final F et incluant ces points. On peut choisir à cet effet un disque de rayon égal à la demi longueur du segment IF à laquelle on ajoute les rayons des virages de ralliement et de capture, ou deux fois un rayon maximum de virage de l'aéronef. Cette sélection peut être effectuée en calculant les coordonnées géographiques du milieu du segment IF, et en testant si au moins un point définissant le contour de chaque zone dangereuse se trouve à une distance de ce point milieu inférieure au rayon du disque considéré.

Sur la figure 2, les zones dangereuses M1, M2, M3 se trouvent au moins partiellement dans le disque ainsi délimité, et donc sont prises en compte dans la suite des calculs.

Il s'avère que ce principe de sélection des zones de menace donne de bons résultats dans la plupart des cas.

Selon l'invention, le calculateur détermine les tangentes TR1 et TR2 aux cercles de ralliement R1 et R2 et aux zones dangereuses M1, M2, M3 sélectionnées. Il détermine de même les tangentes TC1, TC2, TC1', et TC2' aux cercles de capture C1, C2 et aux zones dangereuses M1, M2, M3.

Plus précisément, ces tangentes s'appuient non pas sur les points délimitant les segments de contour des zones dangereuses, mais sur des cercles 11 d'équiprobabilité de danger dont le diamètre correspond à la précision du maillage de la zone survolée.

A cet effet, il détermine tout d'abord pour chaque point I et F représenté sous la référence A sur la figure 4, pour chaque zone dangereuse Mi et pour chaque point Pi (P11 à P19 sur la figure 4) de la zone dangereuse Mi, l'angle de route $\theta i$ correspondant à la droite D passant par les points A et Pi, cet angle étant repéré par exemple par rapport à la direction du Nord géographique, entre -180° et +180°. Il sélectionne ensuite les points P11 et P 14 du contour de la zone Mi qui correspondent aux angles $\theta i$ minimum et maximum.

Pour chacun de ces points P11 et P14 représenté par Pi sur la figure 3, il détermine le cercle de ralliement Ri (ou de capture) à utiliser qui correspond à la phase de virage la plus courte, puis les angles de route $\theta_T$ et $\theta_T$' des deux tangentes T et T' à ce cercle Ri et au cercle d'équiprobabilité 11 centré sur le point Pi, à l'aide de la formule suivante .

$$\theta_T = \theta - \text{asin}\ \frac{R_M - R_R}{d} \tag{1}$$

dans laquelle :

- $\theta$ est l'angle de route correspondant à la droite reliant les centres des cercles Ri et 11,
- d est la distance entre les centres des cercles Ri et 11,
- $R_M$ et $R_R$ sont les rayons respectifs des cercles 11 et Ri, et sont affectés du signe négatif si le cercle est parcouru dans le sens inverse des aiguilles d'une montre, et positif dans le cas contraire.

Ainsi, dans l'exemple de la figure 3, $R_R$ est affecté du signe négatif pour les deux tangentes T et T', tandis que $R_M$ est affecté du signe négatif pour la tangente T, et positif pour la tangente T'.

Pour les deux points P11, P 14 correspondant aux déviations de route minimum et maximum, on obtient quatre tangentes T déterminées par leur angle de route $\theta_T$, parmi lesquelles on sélectionne celles qui correspondent aux angles de route minimum et maximum, de manière à sélectionner les tangentes qui ne pénètrent pas dans la zone dangereuse.

Le calculateur 1 détermine ensuite la position géographique des points de tangence $P_R$ au cercle Ri et $P_M$ au cercle 11 des deux tangentes sélectionnées. Les coordonnées de ces points peuvent être obtenues par les formules suivantes :

$$P_R = \begin{pmatrix} x_{PR} \\ y_{PR} \end{pmatrix} = \begin{pmatrix} x_R + |R_R| \cdot \cos\left(\theta_T - \text{sgn}(R_R) \cdot \frac{\pi}{2}\right) \\ y_R + |R_R| \cdot \sin\left(\theta_T - \text{sgn}(R_R) \cdot \frac{\pi}{2}\right) \end{pmatrix} \tag{2}$$

$$P_M = \begin{pmatrix} x_{PM} \\ y_{PM} \end{pmatrix} = \begin{pmatrix} x_P + |R_M| \cdot \cos\left(\theta_T - \text{sgn}(R_M) \cdot \frac{\pi}{2}\right) \\ y_P + |R_M| \cdot \sin\left(\theta_T - \text{sgn}(R_M) \cdot \frac{\pi}{2}\right) \end{pmatrix} \tag{3}$$

dans lesquelles :

- $x_R$ et $y_R$ sont les coordonnées géographiques du centre du cercle Ri considéré,
- $sgn(R_R)$ est la fonction signe appliquée au rayon $R_R$ du cercle Ri, cette fonction ayant pour valeur 1 si $R_R$ est positif, et -1 si $R_R$ est négatif.
- $x_M$ et $y_M$ sont les coordonnées géographiques du centre du cercle 11 considéré,
- $sgn(R_M)$ est la fonction signe appliquée au rayon $R_M$ du cercle 11.

Il s'agit ensuite de rechercher si chaque tangente ainsi calculée rencontre ou non une zone dangereuse. A cet effet, comme illustré sur la figure 4, le calculateur 1 détermine pour chacune de ces tangentes T à une zone dangereuse M, et successivement pour chaque point P11 à P 19 modélisant le contour de chacune des autres zones dangereuses Mi, le signe de l'angle $\alpha$ entre la tangente étudiée T et la droite D passant par le point A (représentant le point initial I ou final F) de tangence de la tangente T avec les cercles Ri de ralliement ou de capture et le point, P11 à P19, considéré du contour. Chaque changement de signe de cet angle $\alpha$ pour deux points successifs P11 à P 19 d'une même zone dangereuse Mi indique que la tangente étudiée T pénètre ou sort de la zone dangereuse entre ces deux points, ce qui permet de déterminer deux couples de points successifs (P11-P12 et P16-P17 dans l'exemple illustré sur la figure 4) du contour de la zone dangereuse Mi entre lesquels la tangente étudiée T pénètre ou sort de la zone dangereuse. Il suffit ensuite de calculer les coordonnées géographiques des points d'intersection I1, I2 entre la tangente étudiée et les deux segments délimités par ces deux couples de points P11-P12 et P16-P17, et de calculer les distances entre le point A et les points I1 et I2, et la distance entre le point A et le point B de tangence de la tangente étudiée T avec la zone dangereuse M.

Si l'une des distances A-I1 ou A-I2 est inférieure à la distance A-B, cela signifie que la tangente T étudiée rencontre la zone dangereuse Mi avant son point de tangence B. La tangente T étudiée doit donc être éliminée des tangentes possibles pour la solution recherchée.
Le calculateur élimine ainsi toutes les tangentes T précédemment calculées qui traversent une zone dangereuse entre leur point de tangence avec un cercle de ralliement ou de capture et leur point de tangence à une zone dangereuse. Dans l'exemple de la figure 2, le calculateur élimine les tangentes (non représentées) aux cercles de ralliement R1, R2 et aux zones M2 et M3, ainsi que les tangentes aux cercles de capture C1, C2 et à la zone M1.
Il affecte à chaque tangente non éliminée le type "segment" ou "demi-droite" respectivement suivant que la tangente traverse ou non une zone dangereuse sélectionnée après son point de tangence à un cercle de ralliement, ou avant son point de tangence à un cercle de capture, les tangentes de type segment (TC1', TC2') s'étendant entre leur point de tangence à un cercle de ralliement ou de capture et leur point d'entrée dans une zone dangereuse, tandis que les tangentes de type demi-droite (TR1, TR2, TC1, TC2) ont pour origine leur point de tangence à un cercle de ralliement ou de capture et s'étendent en direction de leur point de tangence à une zone dangereuse.

A l'aide de cette distinction de type de tangente, le calculateur 1 détermine ensuite tous les points d'intersection entre les segments ou demi-droite précédemment calculés et non éliminés, TR1, TR2, tangents à un cercle de ralliement R1, R2, et ceux TC1, TC2, TC1', TC2', tangents à un cercle de capture C1, C2. De cette manière il constitue un ensemble de paires de tangentes associées à un point d'intersection, fournissant chacune le squelette d'une trajectoire d'évitement possible, qui ne traverse pas de zone dangereuse.

Le calculateur calcule ensuite les longueurs respectives de ces squelettes de trajectoire, définis par les paires de tangentes précédemment constituées, pour sélectionner celui qui présente la longueur la plus courte. Ainsi, sur la figure 2, la paire de tangentes TR1, TC1 définit le squelette de la trajectoire la plus courte.

Puis, il cherche à optimiser la trajectoire délimitée par la paire de tangentes sélectionnée en lui ajoutant un troisième segment. Dans cette optique, deux cas peuvent se présenter. Dans le premier cas, les deux tangentes de la paire sélectionnée s'appuient sur la même zone dangereuse. Le calculateur détermine alors le segment tangent à la zone dangereuse en question, qui est orienté suivant l'angle de la route théorique reliant les points I et F et définie par la ligne tangente $TR_I$ aux cercles de ralliement et de capture, ce segment étant délimité par les points d'intersection avec les deux tangentes de la paire de tangentes sélectionnée.
Il suffit pour cela de sélectionner parmi les points délimitant le contour de la zone dangereuse, le point situé le plus loin de la route théorique $TR_I$, en calculant les distances respectives de ces points par rapport à cette route, en ne considérant que les points qui se trouvent du même côté de la route $TR_I$ que le point d'intersection des tangentes précédemment sélectionnées TR1, TC1. Le segment tangent recherché est tangent au cercle d'équiprobabilité centré sur le point sélectionné.

Dans le second cas (les deux tangentes de la paire sélectionnée s'appuient sur deux zones dangereuses M1, M2 différentes), le calculateur détermine le segment tangent TM à ces deux zones dangereuses et qui est délimité par les points d'intersection avec les deux tangentes TR1, TC1 de la paire de tangentes sélectionnée.
A cet effet, il calcule les distances respectives entre la route théorique $TR_I$ et tous les points délimitant les contours des deux zones dangereuses M1, M2, situés du même côté de cette route par rapport au point d'intersection des tangentes précédemment sélectionnées TR1, TC1, et il sélectionne le point situé le plus loin de la route $TR_I$. Le segment tangent recherché est tangent au cercle d'équiprobabilité centré sur le point sélectionné, et orienté suivant la route $TR_I$.

Alternativement, il sélectionne les deux points respectifs des deux zones dangereuses M1, M2 situés le plus loin de la route TR$_I$, le segment tangent TM recherché étant tangent aux cercles d'équiprobabilité 11 centrés sur ces deux points.

Le calculateur recherche ensuite si le segment TM rencontre une zone dangereuse et calcule la longueur du segment TM à l'aide des points d'intersection de ce segment avec les tangentes précédemment sélectionnées TR1, TC1. Si ce segment traverse une zone dangereuse ou si sa longueur est inférieure à un seuil prédéfini, ce qui impliquerait des phases de virages trop rapprochées, le calculateur abandonne l'optimisation de la trajectoire, pour aboutir à une trajectoire d'évitement à deux segments.

Dans le cas contraire, on obtient une trajectoire d'évitement à trois segments TR1, TM, TC1.

Une fois que le squelette de la nouvelle trajectoire est ainsi défini par une succession de deux ou trois segments de tangentes, le calculateur détermine les phases de virage au niveau de chaque changement de cap, en plaçant un cercle V1, V2, dont le rayon correspond au rayon de virage prévu, de manière à ce qu'il soit tangent aux segments de trajectoire en amont et aval du virage.

Le calculateur évalue ensuite l'écart relatif de longueur curviligne entre la nouvelle trajectoire et la trajectoire théorique directe TR$_I$ en l'absence de menace, la longueur curviligne d'une trajectoire étant obtenue simplement en additionnant les longueurs des segments et des arcs de la trajectoire.

Si cet écart est supérieur à un seuil prédéterminé, par exemple 20%, il tente d'établir une solution dite de pénétration à l'intérieur du champ des zones dangereuses.

On peut prévoir à ce sujet la possibilité pour le pilote d'indiquer qu'il préfère une solution de contournement par rapport à une solution de pénétration. Il lui suffit pour cela de positionner un indicateur permettant systématiquement d'empêcher l'étude par le calculateur d'une solution de pénétration.

Par ailleurs, il est à noter que si toutes les tangentes non éliminées s'appuient sur la même zone dangereuse, il n'est pas possible de pénétrer à l'intérieur du champ de zones dangereuses, et seule une solution de contournement est possible.

Il en est de même dans le cas où toutes les tangentes non éliminées sont de type demi-droite.

Pour déterminer une trajectoire de pénétration à l'intérieur du champ de zones dangereuses, le calculateur 1 utilise comme précédemment, les tangentes TR1, TR2, TC1, TC2, TC1', TC2' de type demi-droite ou segment communes aux cercles de ralliement R1, R2 ou de capture C1, C2 et aux zones dangereuses M1, M2, M3, comme représenté sur la figure 5. Parmi, toutes ces tangentes, il en sélectionne une paire TR1, TC2', comprenant, s'il en existe, une ou deux tangentes de type segment TC2', pénétrant le plus profondément à l'intérieur du champ des zones dangereuses avant d'en rencontrer une, et sinon, une ou deux tangentes TR1 de type demi-droite correspondant à un angle de déroutement minimum par rapport à la route initiale r$_I$ s'il s'agit d'une tangente à un cercle de ralliement R1, R2, ou finale r$_F$ s'il s'agit d'une tangente à un cercle de capture C1, C2.

La sélection du segment tangent pénétrant le plus profondément à l'intérieur du champ des zones dangereuses s'effectue en comparant les longueurs de ces segments projetés sur la route TR$_I$.

Le calculateur détermine ensuite le segment central TM' entre ces deux tangentes sélectionnées TRI, TC2', s'appuyant sur la tangente commune aux deux zones dangereuses M1, M3 sur lesquelles s'appuient les tangentes sélectionnées TR1, TC2' (figure 5).

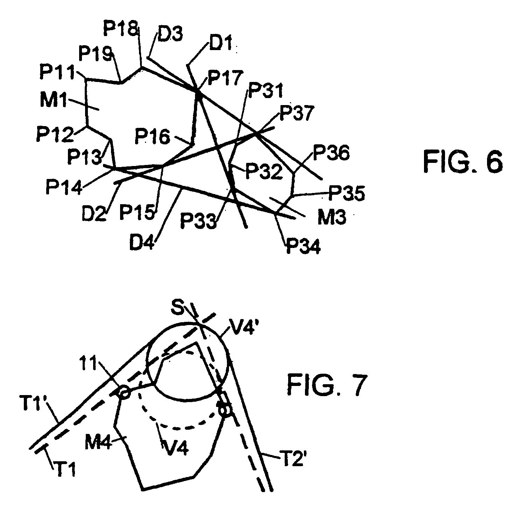

Pour cela, le calculateur détermine toutes les droites reliant deux points respectifs P11 à P19 et P31 à P37 de délimitation de contour des deux zones dangereuses M1, M3 et sélectionne les deux droites D1, D2 qui correspondent respectivement à un angle de route maximum et minimum par rapport au Nord (figure 6). Parmi ces deux droites, il sélectionne cette D1 qui rencontre les tangentes précédemment sélectionnées TR1, TC2', après le point de tangence de TR 1 avec la zone M1 et avant le point de tangence de TC2' avec la zone M2.

Alternativement, le calculateur sélectionne parmi toutes les droites reliant deux points respectifs P11 à P19 et P31 à P37, les quatre droites D1 à D4 qui ne pénètrent pas dans les zones M1, M3 considérées (figure 6). Puis, parmi ces quatre droites, il sélectionne celle D3 qui correspond à un déroutement minimum par rapport aux tangentes TR1, TC2' précédemment sélectionnées, et qui rencontre celles-ci entre leurs points de tangence respectifs avec les cercles de ralliement R1, R2 et de capture C1, C2.

La sélection d'une droite D1 ou D3 reliant les deux zones dangereuses M1, M3, permet de mettre en évidence deux points respectifs P17, P33 ou P17, P37 de ces deux zones, où placer les cercles d'équiprobabilité 11, sur lesquels s'appuie le segment TM' recherché, tangent aux deux zones M1, M3. Il suffit ensuite pour définir ce segment de rechercher les points d'intersection de cette tangente avec les tangentes TR1, TC2'.

Le calculateur détermine si le segment TM' traverse une zone dangereuse. Si tel est le cas, la solution de pénétration à l'intérieur du champ des zones dangereuses est abandonnée au profit de la solution de contournement, éventuellement optimisée, préalablement calculée.

Dans la cas contraire, le calculateur détermine comme précédemment les phases de virage au niveau de chaque changement de cap, en plaçant un cercle de virage V1, V2, V1', V2' tangent aux segments de trajectoire amont et aval du virage.

On peut prévoir de comparer les longueurs curvilignes respectives des trajectoires de contoumement et de pénétration précédemment élaborées, et de sélectionner la trajectoire la plus courte.

Tel que représenté sur la figure 7, il peut se produire, lors du placement des virages V4 au niveau des changements de route, que le virage intercepte les contours d'une zone dangereuse M4, impliquant une durée de survol de la zone dangereuse supérieure à un seuil autorisé. Dans ce cas, le calculateur 1 cherche une autre intersection de tangentes, ou place le cercle de virage V4' non pas tangent aux deux tangentes sélectionnées T1, T2, mais sur l'intersection S des tangentes T1, T2. Le calculateur 1 détermine alors deux nouveaux segments de trajectoire s'appuyant sur les deux tangentes T1' et T2', non pas à la zone dangereuse M4, mais au cercle de virage V4'.

Dans les cas où le calculateur ne peut pas fournir une trajectoire d'évitement, il en avertit le pilote en déclenchant une alarme. Dans le cas contraire, il propose la trajectoire calculée au pilote, qu'il peut à cet effet afficher sur l'écran 2 en surimpression sur les contours des zones dangereuses. Si le pilote valide cette trajectoire, par une commande prévue à cet effet, elle est envoyée au dispositif de pilotage automatique 5 pour être suivie automatiquement sans autre intervention du pilote.

Ce procédé de génération de trajectoire, beaucoup moins exigeant en puissance de calcul que ceux de la technique antérieure, permet d'engendrer et surtout d'actualiser en temps réel une trajectoire à long terme à bord même de l'aéronef devant la suivre, tout en tenant compte des contraintes de la mission et des performances de l'aéronef. Grâce à lui, on peut disposer, à tout instant à bord d'un aéronef d'une trajectoire à long terme actualisée, sous une forme directement exploitable par les instruments d'aide à la navigation du bord et par un dispositif de pilotage automatique. Présentée sur une visualisation en même temps que la position actuelle de l'aéronef, cette trajectoire à long terme actualisée permet au pilote présent dans l'aéronef ou le dirigeant depuis le sol, de visualiser constamment la trace à suivre. Appliquée à un dispositif de pilotage automatique, elle permet un suivi, sans intervention du pilote, de la trajectoire préparée en tenant compte des modifications imposées par les aléas de la mission.

## Revendications

1. Procédé pour la génération, par le système de navigation d'un aéronef, d'une trajectoire horizontale d'évitement de zones dangereuses, entre deux points de passage imposés, l'un dit initial (I) et l'autre dit final (F), qui respecte des contraintes de direction d'approche, route ou cap, de rayon de virage aux points de passage imposés, et d'évitement de zones dangereuses (M1, M2, M3) délimitées par des contours, procédé qui comprend

   la modélisation des contours de chaque zone dangereuse par une succession de segments délimités par des points géographiques (P11 à P19), et **caractérisé en ce qu'**il comprend aussi les étapes suivantes :

   - la détermination des caractéristiques d'un premier et second cercles de ralliement (R1, R2) passant par le point initial (I), tangents à la route initiale ($r_I$), et ayant un rayon correspondant à celui du virage initial, ces deux cercles ayant des sens de parcours inverses l'un de l'autre, déterminés par le sens de la route initiale,
   - la détermination des caractéristiques d'un premier et second cercles de capture (C1, C2) passant par le point final (F), tangents à la route finale ($r_F$), et ayant un rayon correspondant à celui du virage final, ces deux cercles ayant des sens de parcours inverses l'un de l'autre, déterminés par le sens de la route finale,
   - la détermination des caractéristiques de tangentes (TR1, TR2) à la fois aux cercles de ralliement (R1, R2) et sensiblement au contour de chaque zone dangereuse (M1), et (TC1, TC1', TC2, TC2') à la fois aux cercles de capture (C1, C2) et au contour de chaque zone dangereuse (M2, M3),
   - parmi les tangentes précédemment déterminées, la sélection d'une paire de tangentes (TR1, TC1) qui se croisent et qui conduit à la trajectoire la plus courte, comprenant une tangente à un des cercles de ralliement (R1) et une tangente à un des cercles de capture (C1), ces deux tangentes définissant un squelette de trajectoire reliant un cercle de ralliement à un cercle de capture sans pénétrer dans une zone dangereuse, et
   - la détermination d'une trajectoire asservissable de contoumement s'appuyant sur le squelette de trajectoire précédemment défini, et
   - le suivi par l'aéronef de la trajectoire ainsi définie.

2. Procédé selon la revendication 1,
   **caractérisé en ce qu'**il comprend en outre l'optimisation de la trajectoire de contoumement, par ajout d'un segment de trajectoire intermédiaire (TM) entre les routes tangentes (TR1, TC1) de la paire précédemment sélectionnée.

3. Procédé selon la revendication 1 ou 2,

**caractérisé en ce que** des cercles (11) d'équiprobabilité de danger sont centrés sur les points (P11 à P19) délimitant les segments de contour des zones dangereuses (Mi), le diamètre de ces cercles correspondant à une finesse de maillage du terrain, les tangentes (TR1, TR2, TC1, TC1', TC2, TC2') aux zones dangereuses (M1, M2, M3) étant tangentes à ces cercles.

4. Procédé selon l'une des revendications précédentes,
   **caractérisé en ce qu'**il comprend en outre la sélection préalable des zones dangereuses à prendre en compte pour le calcul d'une trajectoire d'évitement, en sélectionnant toutes les zones dangereuses présentant des points de définition de leur contour situés dans un disque centré sur le milieu du segment délimité par les points initial et final (I, F), et incluant ces derniers.

5. Procédé selon l'une des revendications précédentes,
   **caractérisé en ce que** préalablement à la sélection d'une paire de tangentes (TR1, TC1) définissant un squelette de trajectoire, il comprend en outre la détermination d'éventuels points d'intersection entre les tangentes précédemment déterminées et les zones dangereuses (M1, M2, M3), l'élimination des tangentes traversant une zone dangereuse entre leurs points de tangence à une zone dangereuse et à un cercle de ralliement ou de capture, chacune des tangentes non éliminées étant limitée à une demi-droite (TR1, TR2, TC1, TC2) ayant pour origine son point de tangence à un cercle de ralliement ou de capture et s'étendant en direction de son point de tangence à une zone dangereuse, cette demi-droite étant réduite à un segment de droite (TC1', TC2') s'étendant depuis cette origine et se trouvant en dehors de toute zone dangereuse, lorsqu'elle traverse une telle zone.

6. Procédé selon la revendication 5,
   **caractérisé en ce que** la sélection d'une paire de tangente est effectuée en recherchant des points d'intersection entre les tangentes réduites à des demi-droites ou des segments, respectivement issues des cercles de ralliement (R1, R2) et de capture (C1, C2), chaque point d'intersection trouvé correspondant à une paire de tangente qui définit un squelette de trajectoire possible, et en sélectionnant parmi toutes les paires de tangentes ainsi obtenues, celle (TR1, TC1) qui conduit à la trajectoire la plus courte.

7. Procédé selon l'une des revendications précédentes,
   **caractérisé en ce que** si la trajectoire de contournement déterminée présente une longueur excédant un certain seuil prédéterminé par rapport à la longueur de la trajectoire initiale ($TR_1$) en l'absence de zones dangereuses, le procédé comprend en outre la détermination d'une trajectoire pénétrant à l'intérieur du champ des zones dangereuses, sans traverser une zone dangereuse.

8. Procédé selon la revendication 7,
   **caractérisé en ce que** la détermination d'une trajectoire de pénétration dans le champ des zones dangereuses comprend :

   - la sélection d'une paire de tangentes, respectivement tangente à un cercle de ralliement et à un cercle de capture, de type segment (TC2') pénétrant le plus profondément dans le champ des zones dangereuses, s'il en existe, et sinon, de type demi-droite (TR1) qui correspond à un angle de déroutement minimum par rapport à la route initiale ($R_I$) s'il s'agit d'une tangente à un cercle de ralliement (R1, R2), ou finale ($R_F$) s'il s'agit d'une tangente à un cercle de capture (C 1, C2),
   - la détermination d'un segment tangent (TM') aux zones dangereuses (M1, M3) sur lesquelles s'appuient les tangentes de la paire sélectionnée (TR1, TC2'), et délimité par les points d'intersection avec ces dernières, et
   - la détermination d'une trajectoire s'appuyant sur le squelette de trajectoire délimité par la paire de tangentes sélectionnée et le segment tangent précédemment déterminé.

9. Procédé selon la revendication 8,
   **caractérisé en ce que** la détermination d'un segment tangent à deux zones dangereuses (M1, M3) comprend la sélection, parmi toutes les droites reliant deux points respectifs des deux zones dangereuses, de deux droites (D1, D2) ayant respectivement un angle de route minimum et maximum, et la sélection, parmi ces deux droites, d'une droite (D1) qui rencontre les tangentes précédemment selectionnées (TR1, TC2') entre leurs points de tangence respectifs aux zones dangereuses (M1, M3).

10. Procédé selon la revendication 8,
    **caractérisé en ce que** la détermination d'un segment tangent à deux zones dangereuses (M1, M3) comprend la sélection de quatre droites (D1, D2, D3, D4) reliant deux points respectifs des deux zones dangereuses, et ne pénétrant pas dans les zones (M1, M3), et la sélection d'une D3 de ces quatre droite qui rencontre les tangentes précédemment sélectionnées (TR1, TC2') entre leurs points de tangence respectifs aux cercles de ralliement (R1, R2) et de capture (C1, C2)

**11.** Procédé selon l'une des revendications précédentes,
**caractérisé en ce que** la détermination d'une trajectoire à partir d'un squelette de trajectoire précédemment obtenu, constitué par deux ou trois segments, comprend la détermination de phases virages, en plaçant au voisinage de chaque point de jonction de deux segments du squelette de trajectoire un cercle de virage (V1, V2, V'1, V'2) ayant un rayon de virage prédéterminé, tangent à ces deux segments.

**12.** Procédé selon la revendication 11,
**caractérisé en ce que** si un arc de cercle de virage (V4) traverse une zone dangereuse (M4) , il comprend le placement d'un nouveau cercle de virage (V4') centré sur le point de jonction (S) entre les deux segments (T1, T2) de squelette de trajectoire, et le calcul de deux nouveaux segments de trajectoire (T1', T2') tangents au nouveau cercle de virage (V4').

**Claims**

**1.** Method for the generation, by the navigation system of an aircraft, of a horizontal path for avoiding dangerous zones between two prescribed waypoints, one being the so-called initial waypoint (I) and the other the so-called final waypoint (F), which complies with the constraints of direction of approach, course or heading, of turning radius at the prescribed waypoints, and of avoidance of dangerous zones (M1, M2, M3) delimited by contours, which method comprises the modelling of the contours of each dangerous zone by a succession of segments delimited by geographical points (P11 to P19), and **characterized in that** it also comprises the following steps:

- the determination of the characteristics of a first and second rallying circle (R1, R2) passing through the initial point (I), and tangential to the initial course ($r_I$), and having a radius corresponding to that of the initial turn, these two circles having mutually reverse senses of traversal determined by the sense of the initial course,
- the determination of the characteristics of a first and second capture circle (C1, C2) passing through the final point (F), and tangential to the final course ($r_F$), and having a radius corresponding to that of the final turn, these two circles having mutually reverse senses of traversal determined by the sense of the final course,
- the determination of the characteristics of tangents (TR1, TR2) at one and the same time to the rallying circles (R1, R2) and substantially to the contour of each dangerous zone (M1), and (TC1, TC1', TC2, TC2') at one and the same time to the capture circles (C1, C2) and to the contour of each dangerous zone (M2, M3),
- among the previously determined tangents, the selection of a pair of tangents (TR1, TC1) which cross one another and which leads to the shortest path, comprising a tangent to one of the rallying circles (R1) and a tangent to one of the capture circles (C1), these two tangents defining a path skeleton connecting a rallying circle to a capture circle without penetrating into a dangerous zone, and
- the determination of a feedback-controllable bypass path based on the previously defined path skeleton, and
- the following by the aircraft of the path thus defined.

**2.** Method according to Claim 1,
**characterized in that** it furthermore comprises the optimization of the bypass path, by adding an intermediate path segment (TM) between the tangent courses (TR1, TC1) of the previously selected pair.

**3.** Method according to Claim 1 or 2,
**characterized in that** circles (11) of equiprobability of danger are centred on the points (P11 to P19) delimiting the segments of contour of the dangerous zones (Mi), the diameter of these circles corresponding to a fineness of meshing of the terrain, the tangents (TR1, TR2, TC1, TC1', TC2, TC2') to the dangerous zones (M1, M2, M3) being tangential to these circles.

**4.** Method according to one of the preceding claims,
**characterized in that** it furthermore comprises the prior selection of the dangerous zones to be taken into account in the computation of an avoidance path, by selecting all the dangerous zones exhibiting points of definition of their contour that are situated in a disc centred on the middle of the segment delimited by the initial and final points (I, F), and including them.

**5.** Method according to one of the preceding claims,
**characterized in that** prior to the selection of a pair of tangents (TR1, TC1) defining a path skeleton, it furthermore comprises the determination of possible points of intersection between the previously determined tangents and the dangerous zones (M1, M2, M3), the elimination of the tangents passing through a dangerous zone between their points of tangency to a dangerous zone and to a rallying or capture circle, each of the non-eliminated tangents being limited to a straight half-line (TR1, TR2, TC1, TC2) having as origin its point of tangency to a rallying or capture circle and extending in the direction of its point of tangency to a dangerous zone, this straight half-line being reduced to a straight line segment (TC1', TC2') extending from this origin and lying outside any dangerous zone, when said half-line passes through such a zone.

**6.** Method according to Claim 5,
**characterized in that** the selection of a pair of tangents is performed by searching for the points of intersection between the tangents reduced to straight half-lines or segments, respectively arising from the rallying circles (R1, R2) and capture circles (C1, C2), each point of intersection found corresponding to a pair of tangents that defines a possible path skeleton, and by selecting out of all the pairs of tangents thus obtained, that one (TR1, TC1) which leads to the shortest path.

**7.** Method according to one of the preceding claims,
**characterized in that** if the determined bypass path exhibits a length exceeding a certain predetermined threshold with respect to the length of the initial path (TR$_I$) in the absence of dangerous zones, the method furthermore comprises the determination of a path penetrating inside the field of the dangerous zones, without passing through a dangerous zone.

**8.** Method according to Claim 7,
**characterized in that** the determination of a path of penetration into the field of the dangerous zones comprises:

- the selection of a pair of tangents, respectively tangential to a rallying circle and to a capture circle, of segment type (TC2') penetrating most deeply into the field of the dangerous zones, if one exists, and otherwise, of straight half-line type (TR1) which corresponds to an angle of minimum diversion with respect to the initial course (R$_I$) in the case of a tangent to a rallying circle (R1, R2), or final course (R$_F$) in the case of a tangent to a capture circle (C1, C2),
- the determination of a tangent segment (TM'), tangential to the dangerous zones (M1, M3) on which the tangents of the selected pair (TR1, TC2') are based, and delimited by the points of intersection with them, and
- the determination of a path based on the path skeleton delimited by the selected pair of tangents and the previously determined tangent segment.

**9.** Method according to Claim 8,
**characterized in that** the determination of a segment tangential to two dangerous zones (M1, M3) comprises the selection, out of all the straight lines connecting two respective points of the two dangerous zones, of two straight lines (D1, D2) having respectively a minimum and maximum course angle, and the selection, out of these two straight lines, of a straight line (D1) which meets the previously selected tangents (TR1, TC2') between their respective points of tangency to the dangerous zones (M1, M3).

**10.** Method according to Claim 8,
**characterized in that** the determination of a segment tangential to two dangerous zones (M1, M3) comprises the selection of four straight lines (D1, D2, D3, D4) connecting two respective points of the two dangerous zones, and not penetrating into the zones (M1, M3), and the selection of one D3 of these four straight lines which meets the previously selected tangents (TR1, TC2') between their respective points of tangency to the rallying circles (R1, R2) and capture circles (C1, C2).

**11.** Method according to one of the preceding claims,
**characterized in that** the determination of a path on the basis of a previously obtained path skeleton, consisting of two or three segments, comprises the determination of turning phases, by placing in the vicinity of each junction point of two segments of the path skeleton a turning circle (V1, V2, V'1, V'2) having a predetermined turning radius, tangential to these two segments.

**12.** Method according to Claim 11,
**characterized in that** if a turning circle arc (V4) passes through a dangerous zone (M4), it comprises the placing of a new turning circle (V4') centred on the junction point (S) between the two segments (T1, T2) of path skeleton, and the computation of two new path segments (T1', T2') tangential to the new turning circle (V4').

**Patentansprüche**

1. Verfahren zur Generierung einer gefährliche Bereiche vermeidenden, horizontalen Flugbahn zwischen zwei vorgegebenen Durchgangspunkten, dem so genannten Anfangspunkt (I) und dem so genannten Endpunkt (F), durch das Navigationssystem eines Luftfahrzeugs, wobei Beschränkungen zur Anflugrichtung, Route oder Kurs, zum Krümmungsradius in den vorgegebenen Durchgangspunkten beachtet werden und zur Vermeidung von durch Konturen begrenzten gefährlichen Bereichen (M1, M2, M3), wobei das Verfahren die Modellierung der Umrisse jedes gefährlichen Bereichs durch eine Abfolge von durch geographische Punkte (P11 bis P19) begrenzten Segmenten umfasst und **dadurch gekennzeichnet ist, dass** es auch folgende Schritte umfasst:

   - die Bestimmung der Eigenschaften eines ersten und eines zweiten Anschlusskreises (R1,R2), die durch den Anfangspunkt (I) treten, die Anfangsroute ($r_I$) tangential berühren und einen Radius aufweisen, der demjenigen der Anfangskrümmung entspricht, wobei diese zwei Kreise zueinander inverse Durchlaufrichtungen aufweisen, die durch die Richtung der Anfangsroute bestimmt sind,
   - die Bestimmung der Eigenschaften eines ersten und eines zweiten Einfangkreises (C1, C2), die durch den Endpunkt (F) treten, die Endroute ($r_F$) tangential berühren und einen Radius aufweisen, der demjenigen der Endkrümmung entspricht, wobei diese zwei Kreise zueinander inverse Durchlaufrichtungen aufweisen, die durch die Richtung der Endroute bestimmt sind,
   - die Bestimmung der Eigenschaften von Tangenten (TR1, TR2) zugleich an die Anschlusskreise (R1, R2) und im Wesentlichen an die Kontur jedes gefährlichen Bereichs (M1) und von Tangenten (TC1, TC1', TC2, TC2') zugleich an die Einfangkreise (C1, C2) und an die Kontur jedes gefährlichen Bereichs (M2, M3),
   - die Auswahl eines Paares sich kreuzender Tangenten (TR1, TC1) aus den zuvor bestimmten Tangenten, das zu der kürzesten Flugbahn führt, die eine Tangente an einen der Anschlusskreise (R1) und eine Tangente an einen der Einfangkreise (C1) umfassen, wobei diese zwei Tangenten ein Flugbahnskelett bilden, das einen Anschlusskreis mit einem Einfangkreis verbindet, ohne in einen gefährlichen Bereich einzudringen, und
   - die Bestimmung einer steuerbaren Umgehungsflugbahn, die sich an das zuvor definierte Flugbahnskelett anschmiegt, und
   - die Einhaltung der so definierten Flugbahn durch das Luftfahrzeug.

2. Verfahren nach Anspruch 1, **dadurch gekennzeichnet, dass**, es außerdem die Optimierung der Umgehungsflugbahn durch Hinzufügung eines Flugbahnzwischensegments (TM) zwischen den tangentialen Routen (TR1, TC1) des zuvor ausgewählten Paares umfasst.

3. Verfahren nach Anspruch 1 oder 2, **dadurch gekennzeichnet, dass** Kreise (11) gleichwahrscheinlicher Gefahr in den Punkten (P11 bis P19) zentriert sind, die die Kontursegmente von gefährlichen Bereichen (Mi) begrenzen, wobei der Durchmesser dieser Kreise einer Maschenfeinheit des Geländes entspricht, wobei die Tangenten (TR1, TR2, TC1, TC1', TC2, TC2') an die gefährlichen Bereiche (M1, M2, M3) Tangenten an diese Kreise sind.

4. Verfahren nach einem der vorhergehenden Ansprüche, **dadurch gekennzeichnet, dass** es außerdem die vorherige Auswahl von Gefahrenbereichen umfasst, die für die Berechnung einer Vermeidungsflugbahn zu berücksichtigen sind, indem alle gefährlichen Bereiche, die Punkte zur Definition ihrer Kontur umfassen, die in einem in der Mitte des durch die Anfangs- und Endpunkte (I, F) begrenzten Segments zentrierten Scheibe liegen, ausgewählt und diese Letzteren eingeschlossen werden.

5. Verfahren nach einem der vorhergehenden Ansprüche, **dadurch gekennzeichnet, dass** es vor der Auswahl eines Tangentenpaares (TR1, TC1), das ein Flugbahnskelett definiert, außerdem die Bestimmung eventueller Schnittpunkte zwischen den zuvor bestimmten Tangenten und den gefährlichen Bereichen (M1, M2, M3) und die Eliminierung von einen gefährlichen Bereich durchquerenden Tangenten zwischen ihren Berührungspunkten mit einem gefährlichen Bereich und einem Anschlussoder Einfangkreis umfasst, wobei jede nicht eliminierte Tangente auf eine Halbgerade (TR1, TR2, TC1, TC2) begrenzt wird, die als Ursprung ihren Berührungspunkt mit einem Anschluss- oder Einfangkreis aufweisen und sich in Richtung ihres Berührungspunktes mit einem gefährlichen Bereich erstrecken, wobei diese Halbgerade auf ein Geradensegment (TC1', TC2') reduziert wird, das sich ab diesem Ursprung erstreckt und sich außerhalb jeglichen gefährlichen Bereichs befindet, wenn sie einen derartigen Bereich durchquert.

6. Verfahren nach Anspruch 5, **dadurch gekennzeichnet, dass** die Auswahl eines Tangentenpaares dadurch erfolgt, dass Schnittpunkte zwischen den auf Halbgeraden oder Segmente reduzierten Tangenten gesucht werden, die jeweils von Anschluss- (R1, R2) oder Einfangkreisen (C1, C2) abgeleitet werden, wobei jeder gefundene Schnittpunkt einem Tangentenpaar entspricht, das ein mögliches Flugbahnskelett definiert, und indem unter allen so erhaltenen Tangentenpaaren dasjenige (TR1, TC1) ausgewählt wird, das zu der kürzesten Flugbahn führt.

7. Verfahren nach einem der vorhergehenden Ansprüche, **dadurch gekennzeichnet, dass**, falls die bestimmte Umgehungsflugbahn eine Länge aufweist, die einen vorbestimmten Grenzwert im Vergleich zur Länge der Anfangsflugbahn ($TR_i$) beim Fehlen von gefährlichen Bereichen überschreitet, das Verfahren außerdem die Bestimmung einer Flugbahn beinhaltet, die ins Innere des Felds der gefährlichen Bereiche eindringt, ohne einen gefährlichen Bereich zu durchqueren.

8. Verfahren nach Anspruch 7, **dadurch gekennzeichnet, dass** die Bestimmung einer in das Feld der gefährlichen Bereiche eindringenden Flugbahn Folgendes umfasst:

  - die Auswahl eines Tangentenpaares, das jeweils einen Anschlusskreis und einen Einfangkreis tangential berührt, von der Art eines Segments (TC2'), das am tiefsten in das Feld gefährlicher Bereiche eindringt, falls eines existiert, und andernfalls von der Art einer Halbgeraden (TR1), die im Vergleich zur Anfangsroute ($R_I$), falls es sich um eine Tangente an einen Anschlusskreis (R1, R2) handelt, oder zur Endroute ($R_F$), falls es sich um eine Tangente an einen Einfangkreis (C1, C2) handelt, einem minimalen Umleitungswinkel entspricht,
  - die Bestimmung eines Segments (TM'), das die gefährlichen Bereiche tangential berührt, an denen die Tangenten des ausgewählten Paares (TR1, TC2') anliegen, und das durch die Schnittpunkte mit diesen Letzteren begrenzt wird,
  - die Bestimmung einer Flugbahn, die sich an das Flugbahnskelett anlehnt, das durch das ausgewählte Tangentenpaar und das zuvor bestimmte tangential berührende Segment begrenzt wird.

9. Verfahren nach Anspruch 8, **dadurch gekennzeichnet, dass** die Bestimmung eines zwei gefährliche Bereiche (M1, M3) tangential berührenden Segments die Auswahl von zwei Geraden (D1, D2) aus allen zwei jeweilige Punkte von den zwei gefährlichen Bereichen verbindenden Geraden, welche einen maximalen beziehungsweise minimalen Routenwinkel aufweisen, und die Auswahl einer Geraden (D1) aus diesen zwei Geraden umfasst, die die zuvor ausgewählten Tangenten (TR1, TC2') zwischen ihren jeweiligen Berührungspunkten mit gefährlichen Bereichen (M1, M3) trifft.

10. Verfahren nach Anspruch 8, **dadurch gekennzeichnet, dass** die Bestimmung eines Segments, das zwei gefährliche Bereiche (M1, M3) tangential berührt, die Auswahl von vier Geraden (D1, D2, D3, D4) umfasst, die zwei jeweilige Punkte der zwei gefährlichen Bereiche verbinden und nicht in die Bereiche (M1, M3) eindringen, und die Auswahl einer Geraden (D3) dieser vier Geraden, die die zuvor ausgewählten Tangenten (TR1, TC2') zwischen ihren jeweiligen Berührungspunkten mit den Anschluss- (R1, R2) und Einfangkreisen (C1, C2) trifft.

11. Verfahren nach einem der vorhergehenden Ansprüche, **dadurch gekennzeichnet, dass** die Bestimmung einer Flugbahn auf der Basis eines zuvor erhaltenen Flugbahnskeletts, das aus zwei oder drei Segmenten besteht, die Bestimmung von Krümmungsphasen umfasst, indem in die Nachbarschaft jedes Verbindungspunkts zweier Segmente des Flugbahnskeletts ein Krümmungskreis (V1, V2, V'1, V'2) mit einem vorbestimmten Krümmungsradius platziert wird, der diese zwei Segmente tangential berührt.

12. Verfahren nach Anspruch 11, **dadurch gekennzeichnet, dass**, falls ein Krümmungskreisbogen (V4) einen gefährlichen Bereich (M4) durchquert, es die Platzierung eines neuen Krümmungskreises (V4'), der im Verbindungspunkt (S) zwischen den zwei Segmenten (T1, T2) des Flugbahnskelettes liegt, und die Berechnung von zwei neuen Flugbahnsegmenten (T1', T2') umfasst, die den neuen Krümmungskreis (V4') tangential berühren.

FIG. 1

FIG. 2

FIG. 3

FIG. 4

FIG. 5

FIG. 6

FIG. 7